(19) Europäisches Patentamt
European Patent Office
Office européen des brevets

(11) **EP 1 062 650 B1**

(12) **EUROPEAN PATENT SPECIFICATION**

(45) Date of publication and mention of the grant of the patent:
**27.02.2008 Bulletin 2008/09**

(51) Int Cl.:
***G09G 3/32*** *(2006.01)*          ***H04B 10/10*** *(2006.01)*

(21) Application number: **99918218.1**

(22) Date of filing: **19.03.1999**

(86) International application number:
**PCT/IB1999/000891**

(87) International publication number:
**WO 1999/049446 (30.09.1999 Gazette 1999/39)**

(54) **TRICOLOR LED DISPLAY SYSTEM HAVING AUDIO OUTPUT**

DREIFARBIGES LED-ANZEIGESYSTEM WELCHES EINEN AUDIOAUSGANG BESITZT

SYSTEME DE VISUALISATION A DIODES ELECTROLUMINESCENTES TRICOLORES, POSSEDANT UNE SORTIE AUDIO

(84) Designated Contracting States:
**AT BE CH CY DE DK ES FI FR GB GR IE IT LI LU MC NL PT SE**
Designated Extension States:
**AL LT LV MK RO SI**

(30) Priority: **20.03.1998  US 78685 P**

(43) Date of publication of application:
**27.12.2000  Bulletin 2000/52**

(73) Proprietor: **Versitech Ltd.**
**Hong Kong (CN)**

(72) Inventors:
  • **PANG, Grantham Kwok-Hung**
    **Mid-Levels,**
    **Hong Kong (CN)**
  • **YANG, Edward, S.**
    **Menlo Park, CA 94025 (US)**
  • **KWAN, To-On**
    **Kwai Chung,**
    **Hong Kong (CN)**
  • **CHAN, Chi-Ho**
    **Kowloon,**
    **Hong Kong (CN)**
  • **HO, Ka-Lim**
    **Fok On Garden,**
    **MaOn Shan,**
    **Hong Kong (CN)**

(74) Representative: **Jones Day**
**Rechtsanwälte, Attorneys-at-Law, Patentanwälte**
**Prinzregentenstrasse 11**
**80538 München (DE)**

(56) References cited:
**US-A- 4 841 200          US-A- 5 184 114**
**US-A- 5 570 140**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

RELATED APPLICATIONS

This application claims priority from provisional application serial number US 60/078,685 filed in the United States within one year from the filing date of this application.

FIELD OF THE INVENTION

The present invention relates to the field of LED display systems and data communications. More specifically, the invention provides a tricolor light emitting diode ("LED") display system in which the LEDs are used as concurrent display and data communication elements for displaying visible information and for transmitting modulated audio information to an associated receiver.

US 5.570,140 discloses a transmitter sub-system for simultaneously transmitting visible display signals and modulated visible light signals, wherein the modulated visible light signals carry modulated audio information. The modulated visible light signals are received by a receiver sub-system and demodulated to recover the transmitted audio information. The transmitter system is a projection type display apparatus.

SUMMARY OF THE INVENTION

A tricolor LED display system is provided having a plurality of multi-color LEDs that operate as concurrent display and data communication elements. These dual-use tricolor LEDs are coupled to a special-purpose computer system and audio signal transmitter for simultaneously controlling the visible display signal from the LEDs, and for modulating audio information onto the visible light signal emitted by the LEDs. A receiver receives the modulated visible light signal from the LEDs and demodulates the received signal to recover the audio information, which is then presented to a user of the system through an audio interface.

The LED display system preferably includes a transmitter sub-system and a receiver sub-system. The transmitter subsystem may include a special-purpose computer, such as a PC, workstation or embedded computer, and an audio signal transmitter, which are both coupled to the preferred tricolor dot matrix LED display via a special interface circuit. The audio signal transmitter preferably includes a voltage-controlled oscillator for modulating the audio signal information onto the LEDs of the display. The preferred tricolor LED display is capable of generating three distinct colors- red, green and amber. The receiver subsystem may include a lens for focusing the transmitted light from the LEDs onto a photo-detector (or other optical detection means), a demodulator circuit for recovering the audio information from the modulated visible light signal emitted by the tricolor display, and an audio system for presenting the demodulated audio information to a user of the system.

According to one aspect of the invention, a tricolor LED display system is provided that includes a transmitter sub-system for simultaneously transmitting visible display signals and modulated visible light signals through a tricolor LED display, wherein the modulated visible light signals carry modulated audio information; and a receiver sub-system for receiving the modulated visible light signals and for demodulating the visible light signals to recover the transmitted audio information.

According to another aspect of the invention, a tricolor LED display system is provided that includes a tricolor LED dot matrix display having a plurality of tricolor LEDs; means for applying a display signal to the tricolor LEDs to generate a visible signal pattern; and means for applying an audio signal to the tricolor LEDs to emit a modulated visible light signal that carries the audio signal.

Still another aspect of the invention provides an interface circuit for controlling a tricolor LED display, comprising: a row counter decode system coupled to a modulated audio signal for controlling the row selection of the LEDs in the tricolor LED display; and a segment counter decode system coupled to display information for controlling the segment selection of the LEDs in the tricolor LED display. The interface may also include: a parallel port interface for receiving the display information, the display information including display data and addressing information for the LED display; an address comparison unit for comparing the addressing information for the LED display with system addressing information generated by the row counter decode system and the segment counter decode system; and a pattern storage system for storing the display data when the address comparison unit indicates that the addressing information for the LED display is the same as the addressing information generated by the row counter decode system and the segment counter decode system.

It should be noted that these are just some of the many aspects of the present invention. Other aspects not specifically listed will become apparent upon reading the detailed description set forth below.

The present invention provides many advantages overly presently known data communication systems and LED display systems. Not all of these advantages are simultaneously required to practice the invention as claimed, and the following list is merely illustrative of the types of benefits that may be provided, alone or in combination. A primary advantage of the present invention is in the use of tricolor LEDs as the concurrent display and data communication elements. This provides a data communication system that is more reliable. Because tricolor LEDs are utilized in the display of the invention, the background of the display can be energized using a color that is different from the main characters (or messages) being displayed. LEDs in a given row (regardless of color state) can be modulated with the same audio information. By constructing the system in this manner, there will always be an LED lit up in each row, thus ensuring more reliable data transmission over single-color displays, in which certain LEDs in a row have to be shut off in order to provide the correct visible display. In addition to this reliability advantage, the pattern or graphics displayed by the tricolor display will also be more attractive and flexible as more colors can be used for the display.

Other advantages of this invention include, for example: (1) a brighter display than a single-color LED display; (2) reduced noise on the modulated signal due to the design of the interface circuit and its synchronization source; (3) permits text scrolling with no effect on the transmitted modulated signal; and (4) relaxed design constraints on the receiver system.

These are just a few of the many advantages of the present invention, as described in more detail below in terms of the preferred embodiments. As will be appreciated, the invention is capable of other and different embodiments than those specifically set forth below, and its details are capable of modifications in various respects, all without departing from the spirit of the invention. Accordingly, the drawings and description of the preferred embodiments are to be regarded as illustrative in nature and not restrictive.

BRIEF DESCRIPTION OF THE DRAWINGS

FIG. 1 is a block diagram of a preferred tricolor LED display system according to the present invention, including a transmitter sub-system and a receiver sub-system;
FIG. 2 is a block diagram of an audio signal transmitter, which is part of the preferred transmitter sub-system shown in FIG. 1;
FIG. 3 is a block diagram of a preferred receiver sub-system;
FIG. 4 is a block diagram of a preferred interface circuit, which is part of the preferred transmitter sub-system shown in FIG. 1; and
FIG. 5 is a schematic of a tricolor dot matrix display using light emitting diodes.

DETAILED DESCRIPTION OF THE DRAWINGS

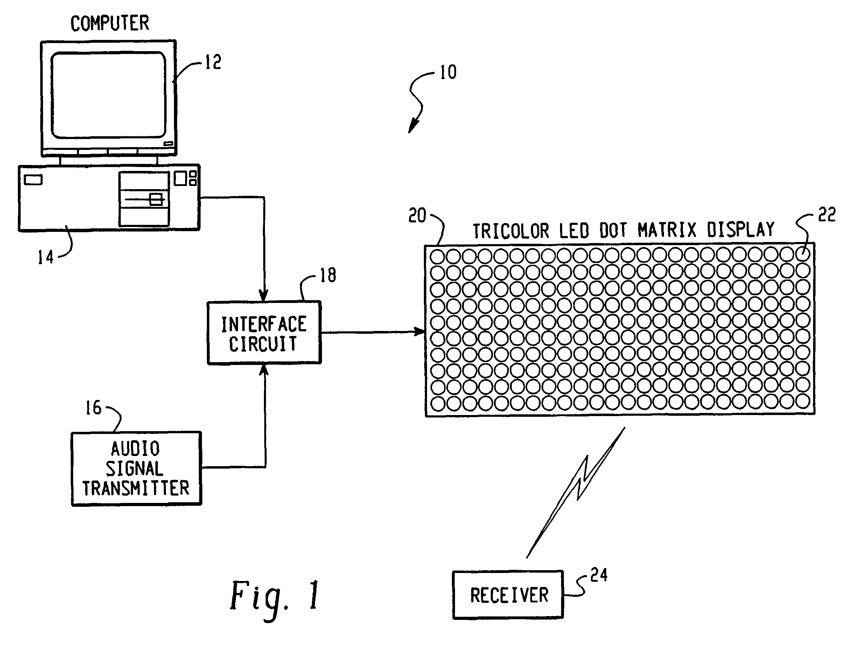

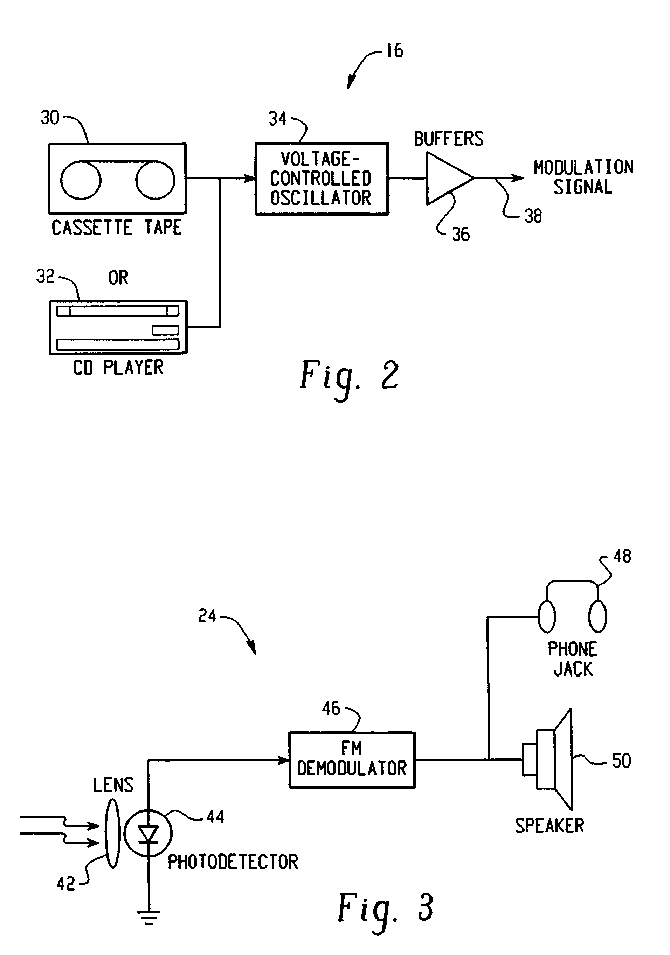

Turning now to the drawing figures, Figure 1 sets forth a block diagram of a preferred tricolor LED display system 10 according to the present invention, including a transmitter sub-system 12-22 and a receiver sub-system 24. The transmitter sub-system includes a computer 12, which may be operating an executive computer program 14, an audio signal transmitter 16, an interface circuit 18, and a tricolor LED display 20 comprising a plurality of tricolor LEDs 22. The receiver sub-system 24 is described in more detail below in connection with Figure 3.

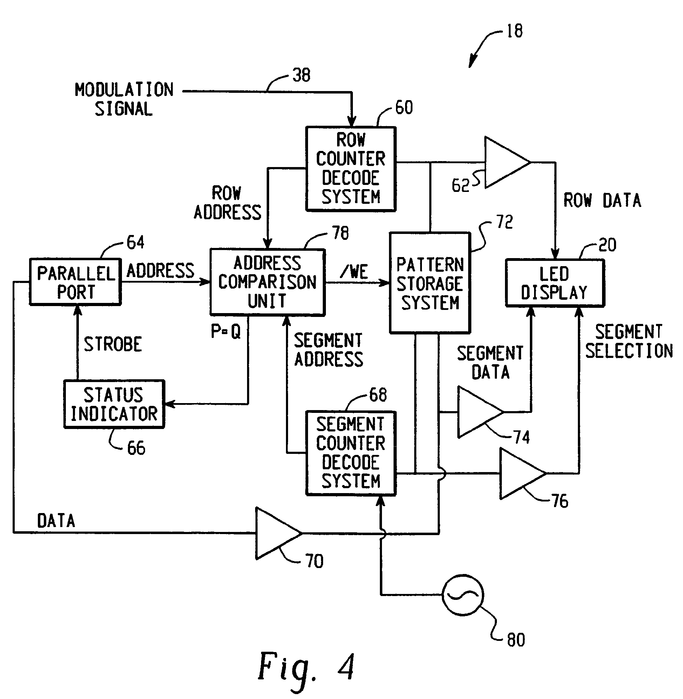

The computer 12 could be a PC, workstation, laptop, embedded computer, or any other type of processing system capable of executing a program. The executive computer program 14 runs on the computer 12, and controls the visual display of characters, decorative patterns or messages on the display panel 20. The audio signal transmitter 16 (described in more detail below in connection with Figure 2) generates the modulated audio signal that is applied to the LED display 20 in order to cause the LEDs 22 to emit the modulated visible light signal that carries the desired audio information. The audio signal transmitter 16 and the computer 12 are coupled to the tricolor LED dot matrix display 20 by the interface circuit 18. The coupling between the computer 12 and the interface circuit 18 is preferably a parallel data port for transporting parallel data from the computer 12 to the interface circuit 18, which uses this data to generate the appropriate display message on the tricolor LED display matrix 20. The preferred interface circuit is described in more detail below in connection with Figure 4. The purpose of this circuit is to simultaneously control the display and data communication functions of the LED display 20.

The receiver sub-system 24 includes elements for receiving the modulated visible light signal from the tricolor display 20, and for demodulating the received signal in order to recover the desired audio information. The preferred elements of the receiver sub-system are described in Figure 3.

Figure 2 is a block diagram of an audio signal transmitter 16 that forms part of the preferred tricolor LED display system shown in Figure 1. The audio signal transmitter includes a source of audio information, such as, for example, a cassette tape 30 or CD player 32, a voltage controlled oscillator ("VCO") circuit 34 and a buffer circuit 36. The output of the audio signal transmitter is a modulation signal 38, which, when applied to the LEDs 22 of the tricolor LED display 20, causes the LEDs to emit the modulated visible light signal that includes the audio information.

The cassette tape 30 or CD player 32 generates audio signals that are to be transmitted by the LED display 22. This audio signal is then fed to the VCO 34, which operates as a frequency modulator ("FM") in order to modulate the audio signal so that a modulated carrier frequency is proportional to the amplitude of the audio signal. The VCO outputs the modulation signal 38, which is applied to the LEDs 22 in order to turn the LEDs on/off at a particular frequency corresponding to the modulation signal. This frequency is high enough such that the perceivable light from the LEDs 22 appears to be constantly illuminated to the human eye. Thus, to an observer there is no indication that the LEDs of the tricolor display are operating in a concurrent manner.

Figure 3 is a block diagram of a preferred receiver sub-system 24. The receiver sub-system 24 includes a lens 42, photo-detector 44, FM demodulator 46 and a speaker 50 and/or headphones 48. The lens 42 collects the visible light emitted by the LED display 20, including the modulated visible light signal. These light rays are then focused onto a photo-detector 44, or other type of optical detection means. The photo-detector 44 converts the modulated visible light signal into an electrical signal. The FM demodulator 46 then demodulates the modulated signal into the original audio signal generated by cassette 30 or CD player 32. A speaker 50, headphones 48 or ear jack can be used for the delivery of the audio messages or music sent from the transmitter 16. The receiver sub-system could be battery powered, such that it is portable, or could be powered by any other type of electrical system.

Figure 4 is a block diagram of a preferred interface circuit 18 that forms part of the preferred transmitter sub-system shown in Figure 1. This circuit 18 may include a row counter decode system 60; a parallel port interface circuit 64; a status indicator 66; a segment counter decode system 68; a pattern storage system 72; an address comparison circuit 78; and an oscillator 80. The circuit may also include one or more buffer/register circuits 62, 70, 74, 76. Three of these buffer/registers 62, 74 and 76 generate the row data, segment data and segment selection signals, respectively, that control the tricolor LED display 20. The interface circuit 18 is coupled to the computer 12 by parallel port interface 64 and to the audio signal transmitter by modulation signal 38.

The modulation signal 38 from the audio signal transmitter 16 is coupled to the row counter decode system 60, which is in turn coupled to the row data input on the tricolor LED display 20 by optional buffer/register 62. The row counter decode system 60 is used to switch among the various rows of the LED display 62, and includes a counter driven by the modulation signal 38, and a decoder for appropriate row selection.

The segment counter decode system 68 is driven by oscillator 80. It is used to switch among the segments of the LED display 20. The segment counter decode system 68 is coupled to the segment selection input on the tricolor LED display 20 by optional buffer/register 76. This circuit 68 includes a counter, which is driven by a fast oscillator 80, and a decoder for segment selection.

The pattern storage system 72 is used to store the LED display pattern of every row and segment in the matrix 20. It is preferably an SRAM, although other types of solid state memory could also be used for this part. The data pattern stored in the pattern storage system 72 is provided by the computer system 12 via parallel port interface 64.

The address comparison unit 78 takes as inputs the current row address (from the row counter decode system 60) and the segment address (from the segment counter decode system 68) and compares these addresses to the address signal from the parallel port interface 64. It compares the system-generated address (based on the two counter systems 60, 68) against the address sent out by the computer 12. This is done to ensure that the SRAM data stored in the pattern storage system 72 and the display 20 will not be disrupted until the LEDs are in the inactive state (off state). Until these address values match, new data is not written into the pattern storage system 72. The address comparison unit 78 includes a bit comparator (for comparing the bits of the address values) and a data register 70. The register holds the message data from the parallel port interface 64 until the system is ready to write data to the SRAM (i.e., when the address values match). When this occurs, the address comparison unit asserts the "/WE" line to the SRAM 72, which causes the register data 70 to be written into the pattern storage system 72. The pattern storage system outputs the segment data to the appropriate LEDs in the tricolor display 20 through an optional buffer/register circuit 74.

The status indicator 66 includes a D-type flip-flop with asynchronous preset and clear inputs. The non-inverted flip-flop output pin (strobe pin) is used to indicate a successful write operation. When this occurs (based on a signal from the address comparison unit 78), the strobe pin will be set high, which is then transmitted to the computer 12 via the parallel port interface 64 so that the computer 12 can send out the next data.

Operationally, the interface circuit 18 updates the display pattern of the tricolor LED display 20 as follows. First, the data from the computer 12 is latched into a register 70. However, the data will not be sent to the SRAM 72 input pins or the segment register 74 input pins so as not to disrupt the normal LED display process. Second, the address from the computer 12 is presented to the address comparator 78, which compares this address against the system-generated address from the row counter decode system 60 and the segment counter decode system 68. When the addresses match, the output of the comparator is pulled low (/WE), which causes the data stored in the register 70 to be written to the pattern storage SRAM 72. Once the write is complete, a signal ("P=Q") from the address comparison unit 78 is sent to the status indicator circuit 66, which sets the strobe output high, thus informing the computer 12 that the write succeeded, and that additional data may be presented to the interface circuit 18.

Having described the preferred circuit structure of the interface circuit 18, it is instructive to consider two additional operational characteristics of this design that provide advantages over presently known LED display systems. The first advantage is the use of multiple clock signals for the LED display, including a high-speed oscillator clock 80 and a modulation clock signal 38. Whenever the modulation signal changes, the active row of the LED display 20 will also be changed. Thus, the row represents a bit of information. The preferred frequency of the modulation signal is 100 kHz. Audio signal information is modulated onto this signal by the VCO 34 of the transmitter sub-system, thus resulting in a frequency range of 100 $\pm$ 44.1 kHz.

The other timing signal used in the preferred interface circuit 18 is generated from the high-speed oscillator 18. In the preferred implementation, a 12 MHz oscillator frequency is used, although other frequencies could also be selected. This signal is used to switch between different segments of the tricolor LED display 20 (*i.e.*, different colors in different characters). The segment clock should operate at a higher frequency than the modulation signal clock 38 so that before the modulation signal 38 is changed (i.e., before the active row is switched), all the segments have been scanned at least once and updated. Otherwise, some segments will not be lit as expected.

While the common signals 92 ("row") are changed at the frequency of the modulation signal (e.g., 100 kHz ), the segment signals 90, 94 ( "column" ) are changed at the higher frequency of about 12 MHz. However, this 12 MHz may be divided by the segment counter 68 so that it is operating at 6 MHz. In addition, only half of the 100 kHz period of the modulation signal is used for segment selection Therefore, during the period that a row is active, the number of times that the segment address is changed is approximated by:

$$\frac{6M}{100k} * \frac{1}{2} = 30 \qquad\qquad [1]$$

The second operational characteristic of the preferred interface circuit 18 is that updating of the pattern data is carried out during the period that the LEDs are in the off state. This eliminates any noise on the emitted LED signals by synchronizing the circuit with the modulation signal 38, including the time when the pattern is updated. The interface circuit 18 updates the display only when the row input to the LED 20 is inactive. In this manner, no noise will be injected into the modulation signal because no data will be transmitted during the pattern update process.

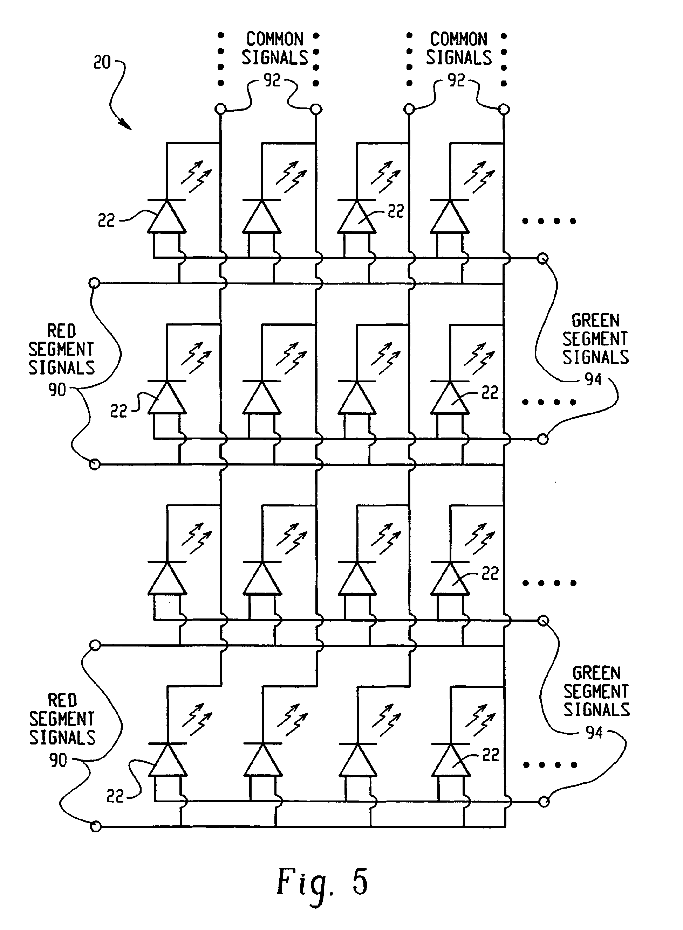

Figure 5 is a schematic of a tricolor dot matrix 20 display using light emitting diodes 22 that are capable of emitting three different colors. These colors are preferably red, green and amber. The individual LEDs 22 are coupled to common signals 92, which tie the LEDs in a given row together, and two segment signals, one for red 90 and another for green 94. To energize an LED, the common signal 92 for that row is held low. Then, if a red signal is to be emitted, just the red segment 90 for the particular column is held high. If a green signal is to be emitted, just the green segment 94 for the particular column is held high. And if an amber signal is to be emitted, both the red 90 and green 94 segments are held high.

The software program 14 used for the display control and pattern update of this tricolor LED dot matrix display 20 operates as follows. For the write cycle, data is first put onto the parallel port bus coupling the computer 12 to the interface circuit 18, which latches this data. The corresponding address (*i.e.*, row and segment data) is then put onto the same bus by the program 14. This address is compared against the system-generated address by the interface circuit 18. If the addresses match, then the message data will be written to the pattern storage system 72 of the interface circuit 18 at that address. A signal will be sent back to the computer 12, indicating a successful write. Since all the LEDs are then illuminated, it is now possible to introduce display effects, such as scrolling into the system.

The benefits of this invention can be applied to a large variety of applications. In an indoor environment, a user with an appropriate receiver system 24 could listen to the audio messages broadcast through the tricolor LEDs 22 of the dot matrix display 20. A quiet atmosphere can be maintained. A major advantage over a conventional broadcasting system is that an individual with a receiver has the freedom of choice in receiving specific messages without hearing any unwanted announcement, music or commercials.

In an outdoor environment, for example in front of a business or commercial institution on the street, the light emitted from the tricolor dot matrix LED display 20 could be used to optically transmit audio information to a user with a receiver and headphones located some distance away from the institution. With this invention, all commercial billboards could be used to transmit additional information such as daily specials, discounts, latest attractions or any merchandise, reservation telephone numbers, etc.

The preferred embodiments and several applications of the inventive system described above are presented only by way of example and are not meant to limit the scope of the present invention, which is defined by the claims. Other elements and steps could be used in place of those shown.

**Claims**

1.  A tricolor LED display system (10), comprising:

    a transmitter sub-system (12-22) for simultaneously transmitting visible display signals and modulated visible light signals through a tricolor LED display (20), wherein the modulated visible light signals carry modulated audio information; and
    a receiver sub-system (24) for receiving the modulated visible light signals and for demodulating the visible light signals to recover the transmitted audio information.

2.  The system of claim 1, wherein the transmitter sub-system (12-22) includes:

    a computer system (12) for generating display information ;
    an audio signal transmitter (16) for generating a modulated audio signal; and
    an interface circuit (18) coupled to the computer system (12) and the audio signal transmitter (16) for applying the display information and the modulated audio signal to the tricolor LED display (20).

3.  The system of claim 1, wherein the tricolor LED display (20) is capable of displaying red, green and amber colors.

4.  The system of claim 2, wherein the computer system (12) is coupled to the interface circuit (18) through a parallel port interface.

5.  The system of claim 2, further including means for executing a computer program (14) operating on the computer system (12) for controlling the generation of display information.

6.  The system of claim 2, wherein the audio signal transmitter (16) includes:

    a source of audio information for generating an audio signal; and
    a modulator coupled to the source of audio information for generating the modulated audio signal.

7.  The system of claim 6, wherein the modulator is a voltage controlled oscillator (34).

8.  The system of claim 1, wherein the receiver sub-system (24) includes:

    an optical sensor (44) for receiving the modulated visible light signal from the tricolor LED display (20);
    a demodulator (46) coupled to the optical sensor (44) for demodulating the modulated visible light signal to recover the transmitted audio signal; and
    a speaker (50) coupled to the audio signal.

9.  The system of claim 8, wherein the receiver sub-system (24) further includes a lens (42) for focusing light emitted by the tricolor LED display (20) onto the optical sensor (44).

10. The system of claim 8, wherein the optical sensor (44) is a photo-detector.

11. The system of claim 2, wherein the interface circuit (18) includes:

    a row counter decode system (60) coupled to the modulated audio signal for controlling the row selection of the LEDs in the tricolor LED display (20); and
    a segment counter decode system (68) coupled to the display information for controlling the segment selection of the LEDs in the tricolor LED display (20).

12. The system of claim 11, wherein the interface circuit (18) further includes:

    a parallel port interface (64) for receiving the display information, the display information including display data and addressing information for the LED display ;
    an address comparison unit (78) for comparing the addressing information for the LED display with system addressing information generated by the row counter decode system (60) and the segment counter decode system (68); and

a pattern storage system (72) for storing the display data when the address comparison unit (78) indicates that the addressing information for the LED display is the same as the addressing information generated by the row counter decode system (60) and the segment counter decode system (68).

13. The system of claim 12, wherein the interface circuit (18) further includes:

a status indicator (66) coupled to the parallel port interface (64) for generating a write complete signal to the computer system (12) when the display data is written to the pattern storage system (72).

14. The system of claim 7, wherein the voltage-controlled oscillator (34) operates as a frequency modulator.

15. A tricolor LED display system, comprising:

a tricolor LED dot matrix display (22) having a plurality of tricolor LEDs (20);
means for applying a display signal to the tricolor LEDs (20) to generate a visible signal pattern; and
means for applying an audio signal to the tricolor LEDs (20) to emit a modulated visible light signal that carries the audio signal.

16. An interface circuit (18) for controlling a tricolor LED display (22), comprising:

a row counter decode system (60) coupled to a modulated audio signal for controlling the row selection of the LEDs (20) in the tricolor LED display (20); and
a segment counter decode system (68) coupled to display information for controlling the segment selection of the LEDs (20) in the tricolor LED display (20).

17. The interface circuit of claim 16, further comprising:

a parallel port interface (64) for receiving the display information, the display information including display data and addressing information for the LED display (20);
an address comparison unit (78) for comparing the addressing information for the LED display with system addressing information generated by the row counter decode system (60) and the segment counter decode system (68); and
a pattern storage system (72) for storing the display data when the address comparison unit (78) indicates that the addressing information for the LED display is the same as the addressing information generated by the row counter decode system (60) and the segment counter decode system (68).

**Patentansprüche**

1. Dreifarben-Leuchtdioden-Anzeigesystem (10), umfassend:

- ein Sender-Untersystem (12-22) zum gleichzeitigen Senden von Signalen zur sichtbaren Anzeige und von modulierten Signalen aus sichtbarem Licht über eine Dreifarben-Leuchtdiodenanzeige (20), wobei die modulierten Signale aus sichtbarem Licht modulierte Audioinformationen tragen; und
- ein Empfänger-Untersystem (24) zum Empfangen der modulierten Signale aus sichtbarem Licht zum Demodulieren der Signale aus sichtbarem Licht zum Wiederherstellen der übertragenen Audioinformationen.

2. System nach Anspruch 1, wobei das Sender-Untersystem (12-22) aufweist:

- ein Computersystem (12) zum Erzeugen von Anzeigeinformationen;
- einen Audiosignalsender (16) zum Erzeugen eines modulierten Audiosignals; und
- eine Schnittstellenschaltung (18), die mit dem Computersystem (12) und dem Audiosignalsender (16) verbunden ist, zum Anlegen der Anzeigeinformationen und des modulierten Audiosignals an die Dreifarben-Leuchtdiodenanzeige (20).

3. System nach Anspruch 1, wobei die Dreifarben-Leuchtdiodenanzeige (20) zum Anzeigen roter, grüner und bernsteinfarbiger Farbe fähig ist.

**4.** System nach Anspruch 2, wobei das Computersystem (12) über eine parallele Schnittstelle mit der Schnittstellenschaltung (18) verbunden ist.

**5.** System nach Anspruch 2, ferner mit einem Mittel zum Ausführen eines Computerprogramms (14), das auf dem Computersystem (12) läuft, zum Steuern der Erzeugung von Anzeigeinformationen.

**6.** System nach Anspruch 2, wobei der Audiosignalsender (16) aufweist:

- eine Quelle von Audioinformationen zum Erzeugen eines Audiosignals; und
- einen Modulator, der mit der Quelle von Audioinformationen verbunden ist, zum Erzeugen eines modulierten Audiosignals.

**7.** System nach Anspruch 6, wobei der Modulator ein spannungsgesteuerter Oszillator (34) ist.

**8.** System nach Anspruch 1, wobei das Empfänger-Untersystem (24) aufweist:

- einen optischen Sensor (44) zum Empfangen des modulierten Signals aus sichtbarem Licht von der Dreifarben-Leuchtdiodenanzeige (20);
- einen Demodulator (46), der mit dem optischen Sensor (44) verbunden ist, zum Demodulieren des modulierten Signals aus sichtbarem Licht zum Wiederherstellen des übertragenen Audiosignals; und
- einen Lautsprecher (50), der mit dem Audiosignal gekoppelt .ist.

**9.** System nach Anspruch 8, wobei das Empfänger-Untersystem (24) ferner eine Linse (42) zum Fokussieren von der Dreifarben-Leuchtdiodenanzeige (20) abgegebenen Lichts auf den optischen Sensor (44) aufweist.

**10.** System nach Anspruch 8, wobei der optische Sensor (44) ein Photodetektor ist.

**11.** System nach Anspruch 2, wobei die Schnittstellenschaltung (18) aufweist:

- ein Zeilenzählerdecodierungssystem (60), das mit dem modulierten Audiosignal gekoppelt ist, zum Steuern der Zeilenauswahl der Leuchtdioden der Dreifarben-Leuchtdiodenanzeige (20); und
- ein Segmentzählerdecodierungssystem (68), das mit den Anzeigeinformationen gekoppelt ist, zum Steuern der Segmentauswahl der Leuchtdioden der Dreifarben-Leuchtdiodenanzeige (20).

**12.** System nach Anspruch 11, wobei die Schnittstellenschaltung (18) ferner aufweist:

- eine parallele Schnittstelle (64) zum Empfangen der Anzeigeinformationen, wobei die Anzeigeinformationen Anzeigedaten und Adressierungsinformationen für die Leuchtdiodenanzeige enthalten;
- eine Adressenvergleichseinheit (78) zum Vergleichen der Adressierungsinformationen für die Leuchtdiodenanzeige mit System-Adressierungsinformationen, die von dem Zeilenzählerdecodierungssystem (60) und dem Segmentzählerdecodierungssystem (68) erzeugt wurden; und
- ein Musterspeichersystem (72) zum Speichern der Anzeigedaten, wenn die Adressenvergleichseinheit (78) angibt, dass die Adressierungsinformationen für die Leuchtdiodenanzeige dieselben sind wie die Adressierungsinformationen, die von dem Zeilenzählerdecodierungssystem (60) und dem Segmentzählerdecodierungssystem (68) erzeugt wurden.

**13.** System nach Anspruch 12, wobei die Schnittstellenschaltung (18) ferner aufweist:

einen Statusanzeiger (66), der mit der parallelen Schnittstelle (64) verbunden ist, zum Erzeugen eines Schreibenabgeschlossen-Signals an das Computersystem (12), wenn die Anzeigedaten in das Musterspeichersystem (72) geschrieben sind.

**14.** System nach Anspruch 7, wobei der spannungsgesteuerte Oszillator (34) als ein Frequenzmodulator fungiert.

**15.** Dreifarben-Leuchtdioden-Anzeigesystem, umfassend:

- eine Dreifarben-Leuchtdioden-Punktmatrixanzeige (22) mit einer Vielzahl von Dreifarben-Leuchtdioden (20);
- Mittel zum Anlegen eines Anzeigesignals an die Dreifarben-Leuchtdioden (20) zum Erzeugen eines sichtbaren Signalmusters; und

- Mittel zum Anlegen eines Audiosignals an die Dreifarben-Leuchtdioden (20) zum Abgeben eines modulierten Signals aus sichtbarem Licht, welches das Audiosignal trägt.

**16.** Schnittstellenschaltung (18) zum Steuern einer Dreifarben-Leuchtdiodenanzeige (22), umfassend:

- ein Zeilenzählerdecodierungssystem (60), das mit einem modulierten Audiosignal gekoppelt ist, zum Steuern der Zeilenauswahl der Leuchtdioden (20) in der Dreifarben-Leuchtdiodenanzeige (20); und
- ein Segmentzählerdecodierungssystem (68), das mit den Anzeigeinformationen gekoppelt ist, zum Steuern der Segmentauswahl der Leuchtdioden (20) in der Dreifarben-Leuchtdiodenanzeige (20).

**17.** Schnittstellenschaltung nach Anspruch 16, ferner umfassend:

- eine parallele Schnittstelle (64) zum Empfangen der Anzeigeinformationen, wobei die Anzeigeinformationen Anzeigedaten und Adressierungsinformationen für die Leuchtdiodenanzeige (20) enthalten;
- eine Adressenvergleichseinheit (78) zum Vergleichen der Adressierungsinformationen für die Leuchtdiodenanzeige mit System-Adressierungsinformationen, die von dem Zeilenzählerdecodierungssystem (60) und dem Segmentzählerdecodierungssystem (68) erzeugt wurden; und
- ein Musterspeichersystem (72) zum Speichern der Anzeigedaten, wenn die Adressenvergleichseinheit (78) angibt, dass die Adressierungsinformationen für die Leuchtdiodenanzeige dieselben sind wie die Adressierungsinformationen, die von dem Zeilenzählerdecodierungssystem (60) und dem Segmentzählerdecodierungssystem (68) erzeugt wurden.

**Revendications**

**1.** Système (10) d'affichage à diodes électroluminescentes tricolores comprenant :

un sous-système émetteur (12-22) pour la transmission simultanée de signaux d'affichage visibles et de signaux de lumière visibles modulés à travers un affichage à diodes électroluminescentes tricolores (20) dans lequel les signaux de lumière visibles modulés portent une information audio modulée ;et
un sous-système récepteur (24) pour la réception de signaux de lumière visibles modulés et pour la démodulation de signaux de lumière visibles afin de récupérer l'information audio transmise.

**2.** Système selon la revendication 1, dans lequel le sous-système émetteur (12-22) comprend :

un système informatique (12) pour la génération d'informations d'affichage ;
un émetteur de signal audio (10) pour la génération d'un signal audio modulé ;
et
un circuit d'interface (18) couplé au système informatique (12) et à l'émetteur de signal audio (16) pour l'application des informations d'affichage et du signal audio modulé à l'affichage à diodes électroluminescentes tricolores (20).

**3.** Système selon la revendication 1, dans lequel l'affichage à diodes électroluminescentes tricolores (20) est capable d'afficher des couleurs rouge, verte et ambre.

**4.** Système selon la revendication 2, dans lequel le système informatique (12) est couplé au circuit d'interface (18) par une interface à ports parallèles.

**5.** Système selon la revendication 2, comprenant en outre des moyens pour l'exécution d'un programme informatique (14) fonctionnant sur le système informatique (12) pour la commande de la génération des informations d'affichage.

**6.** Système selon la revendication 2, dans lequel l'émetteur de signal audio (16) comprend :

une source d'informations audio pour la génération d'un signal audio ; et
un modulateur couplé à la source d'informations audio pour la génération du signal audio modulé.

**7.** Système selon la revendication 6, dans lequel le modulateur est un oscillateur commandé par tension (34).

**8.** Système selon la revendication 1, dans lequel le sous-système récepteur (24) comprend :

un capteur optique (44) pour la réception du signal de lumière visible modulé à partir de l'affichage à diodes électroluminescentes tricolores (20) ;
un démodulateur (46) couplé au capteur optique (44) pour la démodulation du signal de lumière visible modulé afin de récupérer le signal audio transmis ; et
un haut parleur (50) couplé au signal audio.

**9.** Système selon la revendication 8, dans lequel le sous-système récepteur (24) comprend en outre une lentille (42) pour la focalisation de la lumière émise par l'affichage à diodes électroluminescentes tricolores (20) sur le capteur optique (44).

**10.** Système selon la revendication 8, dans lequel le capteur optique (44) est un photodétecteur.

**11.** Système selon la revendication 2, dans lequel le circuit d'interface (18) comprend :

un système de décodage de compteur de rangées (60) couplé au signal audio modulé pour la commande de la sélection de rangées de diodes électroluminescentes dans l'affichage à diodes électroluminescentes tricolores (20) ; et
un système de décodage de compteur de segments (68) couplé aux informations d'affichage pour la commande de la sélection de segments des diodes électroluminescentes dans l'affichage à diodes électroluminescentes tricolores (20).

**12.** Système selon la revendication 11, dans lequel le circuit d'interface (18) comprend en outre :

une interface à ports parallèles (64) permettant la réception des informations d'affichage, les informations d'affichage comprenant des données d'affichage et des informations d'adressage destinées à l'affichage à diodes électroluminescentes ;
une unité de comparaison d'adresses (78) pour la comparaison des informations d'adressage destinées à l'affichage à diodes électroluminescentes et des informations d'adressage de système générées par le système de décodage de compteur de rangées (60) et le système de décodage de compteur de segments (68) ; et
un système de stockage de motif (72) pour le stockage des données d'affichage quand l'unité de comparaison d'adresses (78) indique que les informations d'adressage destinées à l'affichage à diodes électroluminescentes sont les mêmes que les informations d'adressage générées par le système de décodage de compteur de rangées (60) et le système de décodage de compteur de segments (68).

**13.** Système selon la revendication 12, dans lequel le circuit d'interface (18) comprend en outre un indicateur d'état (66) couplé à l'interface à ports parallèles (64) pour la génération d'un signal d'écriture achevée au système informatique (12) quand les données d'affichage sont écrites sur le système de stockage de motif (72).

**14.** Système selon la revendication 7, dans lequel l'oscillateur commandé par tension (34) fonctionne comme un modulateur de fréquence.

**15.** Système d'affichage à diodes électroluminescentes tricolores comprenant :

un affichage (22) à matrice de points à diodes électroluminescentes tricolores ayant une pluralité de diodes électroluminescentes tricolores (20) ;
des moyens pour l'application d'un signal d'affichage aux diodes électroluminescentes tricolores (20) afin de produire un motif de signal visible ; et
des moyens pour l'application d'un signal audio aux diodes électroluminescentes tricolores (20) afin d'émettre un signal de lumière visible modulé qui porte le signal audio.

**16.** Circuit d'interface (18) pour la commande d'un affichage (22) à diodes électroluminescentes tricolores, comprenant :

un système de décodage de compteur de rangées (60) couplé à un signal audio modulé pour la commande de la sélection de rangées de diodes électroluminescentes (20) dans l'affichage à diodes électroluminescentes tricolores (20) ; et
un système de décodage de compteur de segments (68) couplé aux informations d'affichage pour la commande de la sélection de segments des diodes électroluminescentes (20) dans l'affichage à diodes électroluminescentes tricolores (20).

17. Circuit d'interface selon la revendication 16, comprenant en outre :

une interface à ports parallèles (64) pour la réception des informations d'affichage, les informations d'affichage comprenant des données d'affichage et des informations d'adressage destinées à l'affichage à diodes électroluminescentes (20) ;
une unité de comparaison d'adresses (78) pour la comparaison des informations d'adressage destinées à l'affichage à diodes électroluminescentes et des informations d'adressage de système générées par le système de décodage de compteur de rangées (60) et le système de décodage de compteur de segments (68) ; et
un système de stockage de motif (72) pour le stockage des données d'affichage quand l'unité de comparaison d'adresses (78) indique que les informations d'adressage destinées à l'affichage à diodes électroluminescentes sont les mêmes que les informations d'adressage générées par le système de décodage de compteur de rangées (60) et le système de décodage de compteur de segments (68).

22

TRICOLOR LED DOT MATRIX DISPLAY

20

10

24

RECEIVER

18

INTERFACE CIRCUIT

12

COMPUTER

14

16

AUDIO SIGNAL TRANSMITTER

Fig. 1

*Fig. 2*

*Fig. 3*

Fig. 4

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 078685 P
- US 5570140 A